# EUROPEAN PATENT SPECIFICATION

(11) **EP 3 234 220 B1**
(45) Date of publication and mention of the grant of the patent: **03.04.2019**
(21) Application number: 15825837.6
(22) Date of filing: 14.12.2015
(51) Int. Cl.: C23C 22/02, C23F 11/16, C23C 22/76, B05D 1/02, B82Y 30/00

(54) **IMPROVED PROCESS FOR PROTECTING SURFACES OF NOBLE METALS AND/OR OF THEIR ALLOYS AGAINST TARNISHING**
VERBESSERTES VERFAHREN ZUM SCHUTZ VON OBERFLÄCHEN VON EDELMETALLEN UND/ODER IHREN LEGIERUNGEN GEGEN ANLAUFEN
PROCÉDÉ AMÉLIORÉ PERMETTANT DE PROTÉGER DES SURFACES DE MÉTAUX NOBLES ET/OU LEURS ALLIAGES CONTRE LE TERNISSEMENT

(30) Priority: 16.12.2014 IT VE20140069
(43) Date of publication of application: 25.10.2017
(73) Proprietor: AGERE S.r.l., 22100 Como (IT)
(72) Inventor: NARDUCCI, Dario, I-20146 Milano (IT)
(74) Representative: Piovesana, Paolo
(86) International application number: PCT/IB2015/059589
(87) International publication number: WO 2016/097972

(56) References cited:
- WO-A1-2011/104614
- DE-B- 1 279 428
- GB-A- 1 130 540
- US-A- 2 513 187
- BURLEIGH T D ET AL: "TARNISH PROTECTION OF SILVER USING A HEXADECANETHIOL SELF-ASSEMBLED MONOLAYER AND DESCRIPTIONS OF ACCELERATED TARNISH TESTS", CORROSION, NACE INTERNATIONAL, HOUSTON, TX; US, US, vol. 57, no. 12, 1 December 2001 (2001-12-01), pages 1066-1074, XP001133700, ISSN: 0010-9312

## Description

The present invention relates to an improved process for protecting surfaces of noble metals and/or of their alloys against tarnishing.

Noble metals mean herein those metals of group 11 of the periodic table, i.e. silver, gold and copper. Again herein, an "article" means one totally made of one of said noble metals (for example of solid silver and/or its alloys), and those made of another or base metal or alloy, coated on its surface with a layer of micrometric or sub-micrometric thickness of a noble metal (for example of silver and/or its alloys).

Spontaneous tarnishing of silver and silver alloy surfaces and/or of copper and copper alloy surfaces is known to cause progressive variation in the typical surface colour of the metal itself, without however causing any deep corrosion thereof.

Currently, spontaneous tarnishing of silver and silver alloy surfaces when exposed to the atmosphere constitutes a serious problem for silverware producers. It has in fact been shown by much market research that one of the main reasons for the contraction in the sale of silverware articles is related to the tarnishing of their surfaces as a result of the formation of sulphurated silver compounds. Moreover, in functional applications of silver and its alloys and of copper and its alloys (for example in making low voltage electrical contacts), the formation of said sulphurated compounds induces a performance degradation which limits the device life.

For this reason, the protection of silver surfaces against tarnishing or of copper surfaces against oxidation, has been the subject of much research over the years. In particular it has already been proposed to prevent or significantly reduce tarnishing by protecting for example the silver surface by thin polymer layers or by using waxes or surfactants which are deposited on the article surface on termination of its production. These known methods are based on the principle of preventing or generally hindering the adsorption of oxygen, of volatile sulphurated oxidants (such as SO₂ or SO₃), or of non-oxidizing volatile sulphurated compounds (such as H₂S) by the metal surface.

Methods are also known which, both in the case of solid articles and of articles made of base metal alloys coated with the noble metal, prevent surface tarnishing by replacing the silver with alloys of noble metals which are less electropositive and hence less sensitive to tarnishing processes. Moreover, in the more critical industrial applications, in particular in the formation of electrical contacts in high current or in digital electronic circuits or systems, in order to prevent the tarnishing of the silver or the oxidation of the copper affecting the article performance, this is replaced by gold.

However all these known methods present the substantial drawback in the silverware sector of perceptibly modifying the article appearance as they necessarily involve a variation in the material reflectance spectrum; moreover, in electro technical and electronic applications, the known methods involve a significant production cost increase.

Methods are also known consisting of depositing spontaneously ordered molecular layers of organic molecules, the so-called "self-assembled" or "SAM layers" on metals such as gold, silver and copper. These methods in particular enable surface tarnishing to be prevented or delayed, without having to appreciably alter surface colour and brightness.

In detail, SAMs are monolayers or sub-monolayers of ordered organic molecules formed by molecule chemisorption on the surface of solids. In the case of surfaces of metals of group 11 (IB) of the periodic table (Cu, Ag, Au), processes are known [J.C. Love, L.A. Estroff, J.K. Kriebel, R.G. Nuzzo and G.M. Whitesides, "Self-assembled monolayers of thiolates on metals as a form of nanotechnology" Chemical Review, 105 (2005) pages 1103-1169, for forming said SAMs starting from thiols in solution via the formation of direct metal-sulphur bonds. The spontaneous formation of self-assembled layers is of particular interest in that these layers are able to coat surfaces of arbitrary shape and size and can be obtained without recourse to ultra-high vacuum techniques, with consequent production cost reduction.

Moreover, SAMs with coating grades close to unity constitute an effective diffusive barrier to gases. Consequently, SAMs are particularly used to prevent diffusion of oxidizing volatile sulphurated gases such as SO₂, SO₃, and/or non-oxidizing volatile sulphurated compounds such as H₂S, towards the silver surface and hence prevent their reactive adsorption on the surface itself.

In particular, it is known from WO-A-99/48682 to deposit thiols of general formula CH₃(CH₂)ₙSH on silver surfaces by immersing said surfaces in suitable aqueous or organic thiol solutions, this solution having proved effective in retarding silver oxysulphide growth and hence in partially preventing tarnishing of silver articles.

However this known method is not ideal in preventing tarnishing of articles subjected to frequent handling or even only to moderate functional use which exposes their surface to minimal abrasion or which brings the surfaces into contact with sources of heat. The degraded protection capacity of the surface of these articles is probably due to the fact that the assembly procedure described in WO-A-99/48682 assumes that the formulation of covalent bonds between the surface silver atoms and the thiol sulphur atoms occurs spontaneously according to the reaction

Ag + RSH → Ag-SR + 1/2H₂

on the non-oxidized surface, i.e. according to the reaction

Ag-O_{1/2}+RSH → Ag-SR + 1/2H₂O

on the oxidized surface; i.e. according to the reaction

Ag-OH + RSH → Ag-SR + H₂O

on the hydroxylated surface.

In all three of the aforesaid reactions, R is a generic alkyl.

In the method of WO-A-99/48682. the proportion of surface parts terminated with Ag, Ag-O_{1/2} and Ag-OH is not controlled; consequently, given that the fist reaction proceeds only partially at ambient temperature, on termination of the SAM formation reaction, parts of the surface are typically uncoated, possibly causing triggering of local oxidation processes.

Moreover, the presence of scoring of micrometric width on the surface of the articles of silver and/or its alloys, means that the metal surface is not entirely wetted by the thiol solution and hence does not react completely with the thiols. This drawback is inevitably present in industrial articles in which the silver layer is deposited on copper surfaces not properly smoothed. This makes triggering of oxidative processes possible in the unprotected surface regions, hence causing appearance of typically not uniform tarnishing on the surface.

This drawback has been overcome by patent WO2011/104614, which describes a method for protecting surfaces of silver and its alloys against tarnishing, in which the reaction between the thiol and the surface of silver and its alloys is conducted only after complete hydroxylation of the surface, and in which the thiol assembly reaction is brought to completion by promoting the desorption of the reaction product (H₂O) by heating the surface.

In detail, before being brought into contact with a solution of at least one thiol of formula CH₃(CH₂)ₙSH, the surface of silver or of its alloys is exposed to an oxidizing solution able to ensure formation of a thin silver hydroxide layer. The reaction is then brought to completion by heating the surface to a temperature such as to produce desorption of the water formed as the reaction product. In particular, according to this known method, the oxidation of the surface and its subsequent heating are not standard surface cleaning and drying passages, but constitute an essential part of the chemical reaction necessary for forming the SAM.

However the invention the subject of WO2011/104614 necessarily requires the article to be totally immersed several times in pre-treatment and reaction baths, which makes the practical implementation of this method particularly burdensome and complex.

DE 1279428 (D2) relates to a means for protecting silver articles by using compounds containing thiocarbonic acids. This teaches various methods of applying the thiocarbonic acids to the silver surface to be protected, which can be done either by immersion, by spraying or by uniform application. In fact, the suggested preferred treatment method is to incorporate the thiocarbonic acids into a polishing paste.

GB 1130540 teaches a method for protecting silver surfaces against tarnishing which comprises:
- wetting the silver surface of an article with a solution comprising 99 parts by weight of a volatile organic solvent and 0.1-1.8 parts by weight of a solute containing an -SH group, and capable of forming a colourless protective layer on the silver surface,
- reacting the solution with the surface to form this layer,
- evaporating the solvent,
- washing the surface with a detergent solution,
- rinsing the surface with hot water and drying it.

An object of the invention is to propose an improved process for protecting surfaces of noble metals and/or of their alloys against tarnishing which avoids the need for immersion baths both during every passage required for preparing the surface silver or its alloys, and during the SAM formation reaction.

Another object of the invention is to propose a simple, quick process of low cost and low energy consumption.

All these objects and others which will be apparent from the ensuing description are attained, according to the invention, by an improved process for protecting surfaces of noble metals and/or of their alloys against tarnishing having the characteristics indicated in claim 1.

The present invention is further clarified hereinafter in terms of a preferred embodiment thereof with reference to the accompanying drawings, in which:
- Figure 1: is a lateral perspective view from above showing the nebulization chamber used in the process according to the invention,
- Figure 2: shows it turned over sideways, without lid, in accordance with the same view as Figure 1,
- Figure 3: shows schematically an apparatus used for the accelerated tarnishing tests of standard UNI EN ISO 4538,
- Figure 4: shows a comparison between non treated silvered surfaces and those treated according to the present invention.

The article of noble metal, for example of silver or an alloy thereof, which is intended to be protected against tarnishing by the process according to the invention, is initially subjected to a traditional process of cathodic degreasing. In particular, to achieve this, the article is immersed in a mixture of strongly alkaline salts diluted in water, for a time preferably of about 30 seconds, and then rinsed under running water.

The article surface is then exposed to an acid solution in which the acid and its concentration are suitably chosen such as to ensure the formation of a thin layer of silver oxide. In particular, this layer can be formed using any non oxidizing and non hydrogen halide acid, of which the preferred and less costly option is sulphuric acid, in which case the concentrations which enable a silver oxide to be formed are all concentrations between 1 vol% and 30 vol%.

Preferably, the article surface is exposed to a 10% dilute sulphuric acid solution for a sufficient time, of about 1 minute, followed by subjection to final rinsing with distilled water.

This treatment of exposing the surface to an acid solution enables the process of surface neutralization and its hydrosilation to be undertaken in a single passage.

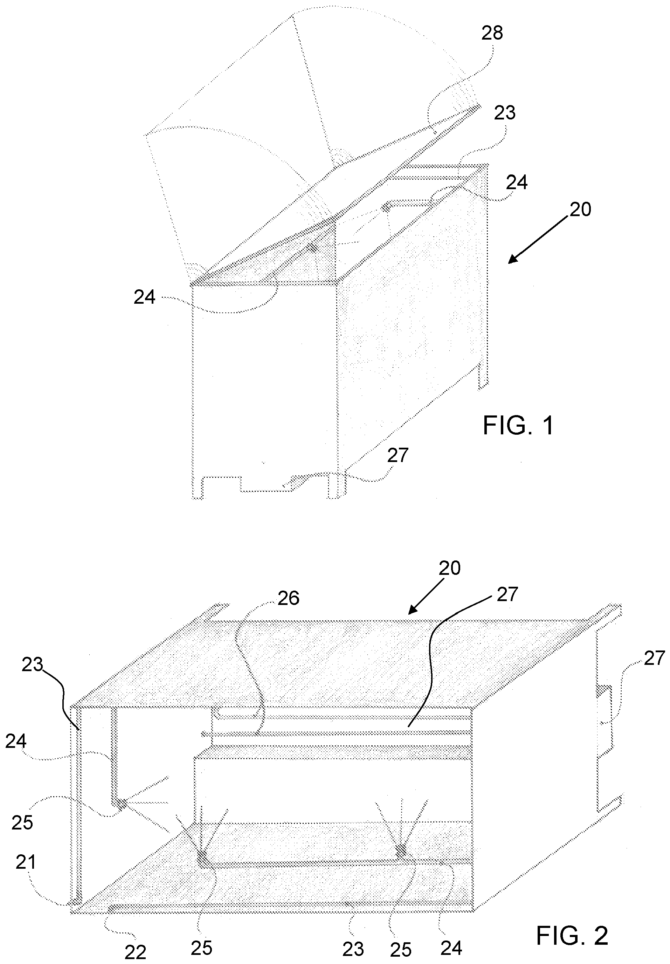

The article is then transferred into a nebulization chamber 20 (see Figures 1 and 2) in which the reaction

Ag-OH + RSH → Ag-SR + H₂O

takes place, where R is a generic alkyl.

Inside this nebulization chamber 20, the surface of the article to be treated is subjected to sprinkling with a solution of at least one thiol.

The nebulization chamber 20 is double-walled, is internally insulated and operates at a temperature between 35°C and 38°C. In particular, the temperature within the chamber 20 is regulated and is maintained within the preferred range both by cooling means (cooling pipe coil 23) and by heating means (resistance heating element 26).

In addition, the nebulization chamber 20 houses a sprinkler system 24 for a solution of thiol, preferably dissolved in isopropanol, and is provided on its bottom with a backing tank 27 for containing and collecting said solution which has been nebulized/sprinkled. In detail, the sprinkler system 24 for said thiol solution comprises positionable showers 25, by which the solution of thiol preferably dissolved in isopropanol is sprinkled onto the surface of the article positioned inside the chamber 20. The showers 25 are preferably positioned in the upper region of the chamber 20.

In particular, the solution of thiol preferably dissolved in isopropanol which has been sprinkled then falls downwards by gravity and is recovered using the indraw backing tank 27. The backing tank 27 is suitably heated indirectly via diathermic or polymer oil, by the resistance heating element 26, to ensure that the recovered solution is at a known predefined temperature. Said solution collected in the backing tank 27 is then again fed via a suitable recirculation system to the inlet of the sprinkler system 24.

The vapours of the sprinkled thiol solution are cooled by the water circulation pipe coil 23 positioned in the upper region of the chamber and connected to the outside via the inlet 21 and outlet 22. In particular, said vapours are cooled such as to cause them to fall downwards and collect in the backing tank 27. Furthermore, the vapours of the sprinkled thiol solution are maintained within the chamber 20 by the openable lid 28 sealed to pressures preferably between 5 and 10 bar.

Preferably, the flow rate of the aerosol sprinkler system 24 for the solution of thiol preferably dissolved in isopropanol is between 60 and 90 l/min, the sprinkling time with the thiol solution being essentially between 5 and 30 minutes.

The thiol CH₃(CH₂)ₙSH solutions used in the process according to the invention are characterised by an "n" between 10 and 16. Preferably, a 0.15 M solution of pentadecanethiol CH₃(CH₂)₁₄SH or of hexadecanethiol CH₃(CH₂)₁₅SH or of undecanethiol CH₃(CH₂)₁₀SH in isopropanol is used.

In particular, the fact that in said thiol solution, "n" is between 10 and 16 represents an advantageous selection in that it enables high resistance to sulphur oxide diffusion to be obtained and hence an effective surface protection, while using low cost thiols easily obtained commercially.

After the nebulization/sprinkling of the solution of thiol possibly dissolved in isopropanol, the article surface is preferably exposed to a non-heated isopropanol aerosol alone, which is sprinkled by the showers 25 for a time of about 5 minutes and in any event sufficient to remove the thiol traces physisorbed on the surface.

Finally, once the article has been removed from the nebulization chamber 20, the assembly reaction is finalized and completed by heating its surface to a temperature suitable for promoting the formation of a covalent chemical bond between said surface and the sprinkled thiol.

This heating is advantageously implemented by placing the article in a muffle oven heated between 40°C and 60°C for a time between 10 minutes and 60 minutes and/or between 80°C and 150°C for a time between 10 and 60 minutes.

This heating step is of fundamental importance in that at ambient temperature (i.e. without any heating), the thiol sprinkled and absorbed onto the surface reacts only partially with the surface. In particular, this heating step is implemented at a temperature and for a time which are suitable to cause a chemical reaction between the thiol and surface, such as to ensure an effective stable and lasting chemical bond between them (chemisorption of the thiols over the entire surface to be protected).

The process according to the invention is usable to protect articles made entirely of a noble metal (for example solid silver) and its alloys, and those made of another metal (not noble) or a base alloy coated on its surface with a layer of micrometric or sub-micrometric thickness of a noble metal (for example of silver and/or its alloys, or of gold).

Moreover, the process according to the invention is usable for treating and protecting surfaces of:
- silver and copper in pure form;
- silver, gold, copper in alloy form;
- silver, gold, copper in alloy with themselves and/or with other metals (for example gold-silver-copper-palladium alloy, also known as "18 carat gold" and "14 carat gold").

In particular, in the case of gold surfaces, these can be surfaces of non-noble metals coated with an incompletely covering ultra-thin gold layer.

In order to verify the results obtained by the process according to the invention, a test chamber was fitted out to evaluate atmospheric tarnishing under accelerated conditions in accordance with the teachings of Italian Standard UNI EN !SO 4538 ("thioacetamide corrosion test", March 1998).

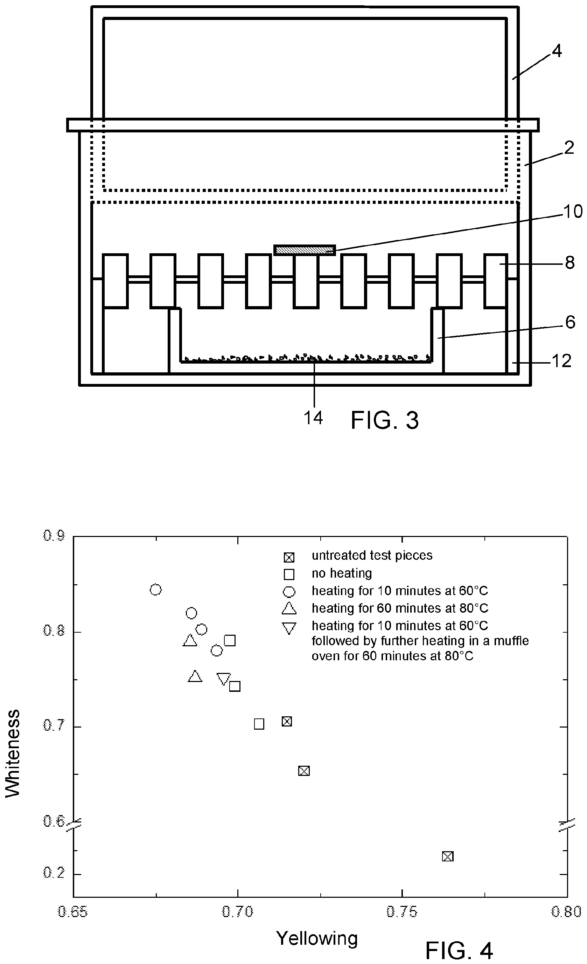

In particular, with reference to Figure 3, the chamber comprises a test environment, consisting essentially of a glass container 2 closed upperly by a cover 4 able to resist corrosion by volatile sulphides, without adding any gas or vapour which could influence the progress of the test.

While carrying out the test, absorbent paper 12 covers the test chamber and is properly pressed against its vertical walls. In particular, the absorbent paper 12 is soaked with a solution of sodium acetate trihydrate Na(CH₃COO)₃H₂O (30 g of sodium acetate trihydrate dissolved in 10 ml of bidistilled water).

In addition, a disc 6 of inert material is inserted into the chamber to act as a container for the thioacetamide (CH₃)CS(NH₂), and a non-metallic inert material frame 8 for supporting the test pieces 10. The test pieces 10 preferably consist of a flat sheet of a base alloy coated with a 7 micron layer of silver.

In detail, a thin uniform layer of thioacetamide powder 14 is spread over the disc 6 in a quantity, for example about 0.020 g, such as to ensure a degree of covering of the disc surface equal or greater than about 0.050 g/dm². The test pieces 10 are then positioned on the support 8 such as not to enter into contact either with the absorbent paper 12 soaked with sodium acetate or with the thioacetamide 14 placed on the disc 6. The chamber is then temperature-controlled at 25-30°C such that the sodium acetate solution determines at equilibrium a fixed relative humidity within the chamber of 75%.

Under these conditions, a first group of test pieces 10 treated with the process according to the invention and a second group of test pieces 10 non treated with the process according to the invention were subjected to the tarnishing test. In particular, the test pieces of both test groups consisted of a flat sheet of a base alloy coated with a 7 micron layer of silver.

The degree of tarnishing is then evaluated at predetermined time intervals, comparing the appearance of the two groups of test pieces by diffuse reflection measurements in the visible light region.

In particular, the degree of tarnishing is evaluated on both groups of test pieces at predetermined time intervals, the results of these tests being represented in Figure 4.

In detail, for each flat test piece the surface colour was determined by placing it on a glass plate and then digitally scanning the surface. Its colour is then represented on a RGB scale. In this manner two quantities are defined:
- the degree of surface whiteness, in the sense of the sum of red, green and blue components of the test piece colour with respect to unity, and
- surface yellowing, in the sense of the complement to one, of the blue chromatic fraction of the sheet colour.

The graph of Figure 4 shows two quantities for:
- untreated test pieces,
- test pieces treated with the process according to the invention under three different operative conditions: heating in a muffle oven for 10 minutes at 60°C, heating in a muffle oven for 60 minutes at 80°C, heating in a muffle oven for 10 minutes at 60°C, followed by further heating in a muffle oven for 60 minutes at 80°C.

From the results shown in Figure 4, it can be seen that the process according to the invention enables systematic improvement in surface protection against tarnishing compared with the untreated test pieces. In this respect, all the treated surfaces present a higher degree of whiteness and a lower degree of yellowing than untreated surfaces.

The results further show that the process according to the invention is particularly advantageous, in that it enables virtually all those advantages to be obtained which are obtainable with the method according to WO2011/104614 compared with the state of the art, while at the same time eliminating the need to totally immerse the article to be treated several times in pre-treatment and reaction baths. The ability to avoid treatment by immersion in tanks containing thiol and isopropanol positively affects the safety costs relating to the presence of such tanks containing flammable solvents. In particular, the process according to the invention requires a lesser thiol and isopropanol quantity, enabling not only a saving in material, but above all improved operator safety. Hence, essentially, the implementation of the process according to the present invention is substantially more simple, practical and economical.

## Claims

1. An improved process for protecting surfaces of noble metals and/or of their alloys against tarnishing, **characterised by** comprising the following steps in sequence:
- subjecting the surface to be treated to cathodic degreasing,
- exposing the surface cleaned in this manner to an acid solution in concentration such as to ensure the formation of a thin layer of an oxide of the noble metal of said surface,
- inside a nebulization chamber (20), subjecting the surface oxidized in this manner to sprinkling with a solution comprising at least one thiol,
- after extracting the surface treated in this manner from the nebulization chamber, heating said surface to a temperature such as to promote the formation of a covalent chemical bond between said surface and said thiol.

2. A process as claimed in claim 1, **characterised by** carrying out said cathodic degreasing by immersion in a mixture of strongly alkaline salts diluted in water, for a time of at least 30 seconds, then rinsing under running water.

3. A process as claimed in one or more of the preceding claims, **characterised by** exposing the previously cleaned surface to a solution of sulphuric acid diluted to a concentration of 1 vol% - 30 vol%, for a time of about one minute, followed by rinsing in distilled water.

4. A process as claimed in one or more of the preceding claims, **characterised in that** the thiol used for said sprinkling is
CH₃(CH₂)ₙSH
where n is between 10 and 16.

5. A process as claimed in one or more of the preceding claims, **characterised in that** the thiol used for said sprinkling is dissolved in isopropanol.

6. A process as claimed in one or more of the preceding claims, **characterised in that** for said sprinkling, a 0.15 M solution of pentadecanethiol CH₃(CH₂)₁₄SH in isopropanol, or of hexadecanethiol CH₃(CH₂)₁₅SH in isopropanol, or of undecanethiol CH₃(CH₂)₁₀SH in isopropanol is used.

7. A process as claimed in one or more of the preceding claims, **characterised in that**, inside said nebulization chamber (20), after subjecting the oxidized surface to said sprinkling with a solution of at least one thiol, the same surface is subjected to further sprinkling with an isopropanol solution, alone and unheated, to remove the thiol traces physisorbed on said surface.

8. A process as claimed in one or more of the preceding claims, **characterised in that** the nebulization chamber (20) comprises:
- a sprinkler system (24) provided with positionable spray means (25) by which the thiol solution is sprinkled onto said surface to be treated,
- a backing tank (27) disposed on the bottom of said chamber (20), to contain and collect thiol solution sprinkled by said spray means (25).
- a recirculation system to feed the thiol solution collected in said backing tank (27) back to said sprinkler system (24).

9. A process as claimed in one or more of the preceding claims, **characterised in that** the nebulization chamber (20) comprises means for indirectly heating the sprinkled thiol solution collected in said backing tank (27).

10. A process as claimed in one or more of the preceding claims, **characterised in that** in its upper region, the nebulization chamber (20) comprises means for cooling the vapours of the sprinkled thiol solution.

11. A process as claimed in one or more of the preceding claims, **characterised in that** the flow rate of the sprinkler system (24) for the thiol solution is between 60 and 90 I/min, the treatment time in said chamber (20) by sprinkling with said thiol solution being between 5 and 120 minutes.

12. A process as claimed in one or more of the preceding claims, **characterised in that** said surface is heated inside a muffle oven:
- to a temperature between 40°C and 60°C for a time between 10 and 60 minutes, or
- to a temperature between 80°C and 150°C for a time between 10 and 60 minutes, or
- initially to a temperature between 40°C and 60°C for a time between 10 and 60 minutes, then to a temperature between 80°C and 150°C for a time between 10 and 60 minutes.

13. A process as claimed in one or more of the preceding claims, **characterised in that** said surfaces to be treated and protected against tarnishing comprise:
- silver or copper in pure form; or
- an alloy of at least one of the following elements: silver, gold, copper; or
- an alloy of at least one from among silver, gold, copper with other metals.

## Patentansprüche

1. Verbessertes Verfahren zum Schutz von Oberflächen von Edelmetallen und/oder ihren Legierungen gegen Anlaufen, **dadurch gekennzeichnet, dass** es der Reihe nach die folgenden Schritte umfasst:
- Unterziehen der zu behandelnden Oberfläche einer kathodischen Entfettung,
- Aussetzen der auf diese Weise gereinigten Oberfläche einer konzentrierten Säurelösung, um die Bildung einer dünnen Schicht eines Oxids des Edelmetalls der besagten Oberfläche sicherzustellen,
- Unterziehen der auf diese Weise oxidierten Oberfläche einem Besprühen in einer Zerstäubungskammer (20) mit einer Lösung, die mindestens ein Thiol umfasst,
- nach dem Entnehmen der auf diese Weise behandelten Oberfläche aus der Zerstäubungskammer, Erwärmen der besagten Oberfläche auf eine Temperatur, um die Bildung einer kovalenten chemischen Bindung zwischen der besagten Oberfläche und dem besagten Thiol zu fördern.

2. Verfahren nach Anspruch 1, **dadurch gekennzeichnet, dass** das besagte kathodische Entfetten durch Eintauchen in ein Gemisch aus stark alkalischen, in Wasser verdünnten Salzen für eine Zeitdauer von mindestens 30 Sekunden und anschließend durch Spülen unter fließendem Wasser durchgeführt wird.

3. Verfahren nach einem oder mehreren der vorhergehenden Ansprüche, **dadurch gekennzeichnet, dass** die zuvor gereinigte Oberfläche einer auf eine Konzentration von 1 Vol.-% bis 30 Vol.-% verdünnten Lösung von Schwefelsäure für eine Zeitdauer von etwa einer Minute ausgesetzt wird, gefolgt von einem Spülen in destilliertem Wasser.

4. Verfahren nach einem oder mehreren der vorhergehenden Ansprüche, **dadurch gekennzeichnet, dass** das zum besagten Besprühen verwendete Thiol
CH₃(CH₂)ₙSH
ist, wobei n zwischen 10 und 16 liegt.

5. Verfahren nach einem oder mehreren der vorhergehenden Ansprüche, **dadurch gekennzeichnet, dass** das zum besagten Besprühen verwendete Thiol in Isopropanol gelöst ist.

6. Verfahren nach einem oder mehreren der vorhergehenden Ansprüche, **dadurch gekennzeichnet, dass** zum besagten Besprühen eine Lösung aus 0,15 M Pentadecanthiol CH₃(CH₂)₁₄SH in Isopropanol oder aus Hexadecanthiol CH₃(CH₂)₁₅SH in Isopropanol oder aus Undecanthiol CH₃(CH₂)₁₀SH in Isopropanol verwendet wird.

7. Verfahren nach einem oder mehreren der vorhergehenden Ansprüche, **dadurch gekennzeichnet, dass** nach dem Unterziehen der oxidierten Oberfläche dem besagten Besprühen mit einer Lösung aus mindestens einem Thiol innerhalb der besagten Zerstäubungskammer (20) die gleiche Oberfläche einem weiteren Besprühen mit einer Isopropanollösung, allein und nicht erwärmt, unterzogen wird, um die auf der besagten Oberfläche physisorbierten Thiolspuren zu entfernen.

8. Verfahren nach einem oder mehreren der vorhergehenden Ansprüche, **dadurch gekennzeichnet, dass** die Zerstäubungskammer (20) umfasst:
- ein Sprinklersystem (24), das mit positionierbaren Sprühmitteln (25) versehen ist, durch die die Thiollösung auf die zu behandelnde Oberfläche gesprüht wird;
- einen Rückhaltebehälter (27), der auf dem Boden der besagten Kammer (20) angeordnet ist, um von den besagten Sprühmitteln (25) versprühte Thiollösung aufzunehmen und zu sammeln.
- ein Rückführsystem, um die in dem besagten Rückhaltebehälter (27) gesammelte Thiollösung zurück zu dem besagten Sprinklersystem (24) zu führen.

9. Verfahren nach einem oder mehreren der vorhergehenden Ansprüche, **dadurch gekennzeichnet, dass** die Zerstäubungskammer (20) Mittel zum indirekten Erwärmen der im besagten Rückhaltebehälter (27) gesammelten versprühten Thiollösung umfasst.

10. Verfahren nach einem oder mehreren der vorhergehenden Ansprüche, **dadurch gekennzeichnet, dass** die Zerstäubungskammer (20) in ihrem oberen Bereich Mittel zum Kühlen der Dämpfe der versprühten Thiollösung umfasst.

11. Verfahren nach einem oder mehreren der vorhergehenden Ansprüche, **dadurch gekennzeichnet, dass** die Durchflussgeschwindigkeit des Sprinklersystems (24) für die Thiollösung zwischen 60 und 90 l/min liegt, wobei die Behandlungszeit in der besagten Kammer (20) durch Besprühen mit der besagten Thiollösung zwischen 5 und 120 Minuten liegt.

12. Verfahren nach einem oder mehreren der vorhergehenden Ansprüche, **dadurch gekennzeichnet, dass** die besagte Oberfläche in einem Muffelofen:
- auf eine Temperatur zwischen 40 °C und 60 °C für eine Zeitdauer zwischen 10 und 60 Minuten oder
- auf eine Temperatur zwischen 80 °C und 150 °C für eine Zeitdauer zwischen 10 und 60 Minuten oder
- zunächst auf eine Temperatur zwischen 40 °C und 60 °C für eine Zeitdauer zwischen 10 und 60 Minuten, dann auf eine Temperatur zwischen 80 °C und 150 °C für eine Zeitdauer zwischen 10 und 60 Minuten erwärmt wird.

13. Verfahren nach einem oder mehreren der vorhergehenden Ansprüche, **dadurch gekennzeichnet, dass** die zu behandelnden und gegen Anlaufen zu schützenden besagten Oberflächen umfassen:
- Silber oder Kupfer in reiner Form; oder
- eine Legierung aus mindestens einem der folgenden Elemente: Silber, Gold, Kupfer; oder
- eine Legierung aus mindestens einem aus Silber, Gold, Kupfer mit anderen Metallen.

## Revendications

1. Procédé amélioré de protection contre le ternissement des surfaces de métaux nobles et/ou de leurs alliages, **caractérisé en ce qu'**il comprend les étapes successives suivantes:
- soumettre la surface à traiter à un dégraissage cathodique,
- exposer la surface ainsi nettoyée à une solution acide dont la concentration permet d'assurer la formation d'une couche mince d'un oxyde du métal noble de ladite surface,
- à l'intérieur d'une chambre de nébulisation (20), soumettre la surface ainsi oxydée à une aspersion d'une solution comprenant au moins un thiol,
- après avoir extrait la surface ainsi traitée de la chambre de nébulisation, chauffer ladite surface à une température suffisante pour favoriser la formation d'une liaison chimique covalente entre ladite surface et ledit thiol.

2. Procédé selon la revendication 1, **caractérisé en ce que** l'on effectue ledit dégraissage cathodique par immersion dans un mélange de sels fortement alcalins dilués dans de l'eau, pendant une durée d'au moins 30 secondes, puis rinçage à l'eau courante.

3. Procédé selon une ou plusieurs des revendications précédentes, **caractérisé en ce qu'**on expose la surface préalablement nettoyée à une solution d'acide sulfurique diluée à une concentration de 1% à 30% en volume, pendant une durée d'environ une minute, puis en rinçant à l'eau distillée.

4. Procédé selon une ou plusieurs des revendications précédentes, **caractérisé en ce que** le thiol utilisé pour ladite aspersion est
CH₃(CH₂)ₙSH
où n est compris entre 10 et 16.

5. Procédé selon une ou plusieurs des revendications précédentes, **caractérisé en ce que** le thiol utilisé pour ladite aspersion est dissous dans de l'isopropanol.

6. Procédé selon une ou plusieurs des revendications précédentes, **caractérisé en ce que**, pour ladite aspersion, une solution 0,15 M de pentadécanethiol CH₃(CH₂)₁₄SH dans de l'isopropanol ou d'hexadécanéthiol CH₃(CH₂)₁₅SH dans de l'isopropanol, ou de l'undecanethiol On utilise CH₃(CH₂)₁₀SH dans l'isopropanol.

7. Procédé selon une ou plusieurs des revendications précédentes, **caractérisé en ce que**, à l'intérieur de ladite chambre de nébulisation (20), après avoir soumis la surface oxydée à ladite aspersion avec une solution d'au moins un thiol, on soumet la même surface à un aspersion successive avec une solution d'isopropanol, seul et non chauffé, pour éliminer les traces de thiol physisorbées sur ladite surface.

8. Procédé selon une ou plusieurs des revendications précédentes, **caractérisé en ce que** la chambre de nébulisation (20) comprend:
- un système de arroseurs (24) muni de moyens de vaporisation (25) déplaceables au moyen desquels la solution de thiol est aspergée sur ladite surface à traiter,
- un réservoir de support (27) disposé au fond de ladite chambre (20) pour contenir et collecter une solution de thiol saupoudrée par ledit moyen de pulvérisation (25).
- un système de recirculation pour renvoyer la solution de thiol collectée dans ledit réservoir de support (27) vers ledit système de arroseurs (24).

9. Procédé selon une ou plusieurs des revendications précédentes, **caractérisé en ce que** la chambre de nébulisation (20) comprend des moyens pour chauffer indirectement la solution de thiol aspergée recueillie dans ledit réservoir de rétroprojecteur (27).

10. Procédé selon une ou plusieurs des revendications précédentes, **caractérisé en ce que** dans sa région supérieure, la chambre de nébulisation (20) comprend des moyens pour refroidir les vapeurs de la solution de thiol aspergée.

11. Procédé selon une ou plusieurs des revendications précédentes, **caractérisé en ce que** le débit du système de arroseurs (24) pour la solution de thiol est compris entre 60 et 90 l/min, le temps de traitement dans ladite chambre (20) par aspersion de ladite solution de thiol étant compris entre 5 et 120 minutes.

12. Procédé selon une ou plusieurs des revendications précédentes, **caractérisé en ce que** ladite surface est chauffée à l'intérieur d'un four à moufle:
- à une température comprise entre 40 et 60°C pendant une durée comprise entre 10 et 60 minutes, ou
- à une température comprise entre 80 et 150°C pendant une durée comprise entre 10 et 60 minutes, ou
- initialement à une température comprise entre 40°C et 60°C pendant une durée comprise entre 10 et 60 minutes, puis à une température comprise entre 80°C et 150°C pendant une durée comprise entre 10 et 60 minutes.

13. Procédé selon l'une ou plusieurs des revendications précédentes, **caractérisé en ce que** lesdites surfaces à traiter et protégées contre le ternissement comprennent:
- argent ou cuivre sous forme pure; ou
- un alliage d'au moins un des éléments suivants: argent, or, cuivre; ou
- un alliage d'au moins un parmi l'argent, l'or, le cuivre et d'autres métaux.
